(19) 

Europäisches
Patentamt
European
Patent Office
Office européen
des brevets

(11) **EP 3 331 701 B1**

(12) **EUROPEAN PATENT SPECIFICATION**

(45) Date of publication and mention
of the grant of the patent:
**07.10.2020 Bulletin 2020/41**

(21) Application number: **16741912.6**

(22) Date of filing: **19.07.2016**

(51) Int Cl.:
**B32B 27/32** (2006.01)   **C08J 5/18** (2006.01)
**C08L 23/14** (2006.01)   **B32B 27/08** (2006.01)

(86) International application number:
**PCT/EP2016/067143**

(87) International publication number:
**WO 2017/021137 (09.02.2017 Gazette 2017/06)**

(54) **MUTILAYER FILM COMPRISING PROPYLENE-ETHYLENE-1-BUTENE TERPOLYMERS**

MEHRSCHICHTFOLIE MIT PROPYLEN-ETHYLEN-1-BUTEN-TERPOLYMEREN

FILM MULTICOUCHE COMPRENANT DES TERPOLYMÈRES
PROPYLÈNE-ÉTHYLÈNE-1-BUTÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2015 EP 15180036**

(43) Date of publication of application:
**13.06.2018 Bulletin 2018/24**

(73) Proprietor: **Basell Poliolefine Italia S.r.l.**
**20121 Milano (IT)**

(72) Inventors:
• **MASSARI, Paola**
**44122 Ferrara (IT)**
• **CATHELIN, Caroline**
**44122 Ferrara (IT)**
• **CAVALIERI, Claudio**
**44122 Ferrara (IT)**
• **CIARAFONI, Marco**
**44122 Ferrara (IT)**

• **FELISATI, Andrea**
**44122 Ferrara (IT)**
• **FERRARO, Angelo**
**44122 Ferrara (IT)**
• **MORINI, Giampiero**
**44122 Ferrara (IT)**
• **PIEMONTESI, Fabrizio**
**44122 Ferrara (IT)**
• **VITALE, Gianni**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 674 991      EP-A1- 2 666 793
EP-A1- 2 743 307      EP-A1- 2 810 773
EP-A2- 0 203 727      EP-A2- 1 243 612
US-A1- 2005 142 367**

**Description**

FIELD OF THE INVENTION

The present disclosure relates to multilayer films comprising a composition comprising a propylene/ethylene copolymer and a propylene/ethylene/1-butene terpolymers, Multilayer films so obtained have excellent properties in terms of seal initiation temperature (SIT), optical properties and printability

BACKGROUND OF THE INVENTION

Films made of propylene copolymers or terpolymers are known in the art.

Propylene copolymers or terpolymers are used because, with respect to propylene homopolymers, are characterized by a better impact, lower rigidity and better transparency. In some cases however, it is difficult to find the acceptable balance between those properties, particularly when properties contrasting to each other are desired. When a certain softness is desired, for example, it is commonly obtained in the presence of high amount of xylene soluble fractions that make them unsuitable for food contact applications.

US Patent No. US 6,221,984 discloses random copolymers of propylene with ethylene and at least one $C_4$-$C_{10}$ alpha-olefin and a process for preparing such random copolymers, which can be used in films, fibers or moldings. In particular, the terpolymers obtained by the process disclosed in this specification are particularly suitable for food packaging films because of their low proportions of xylene-soluble polymer particles (Examples 1-3). On the other hand, when the xylene soluble fraction is increased, the sealing initiation temperature of a film and its optical properties become unsatisfactory

WO 2009/019169 relates to a propylene/ethylene/1-butene terpolymer prepared in a gas phase reactor comprising two interconnected polymerization zones. Said terpolymer has among other features the ratio between ethylene amount (wt%) and 1-butene amount (wt%) ranging from 0.1 to 0.8 and a xylene soluble fraction at 25°C higher than 9 wt%..

WO2013/174778 relates to a propylene, ethylene, 1-butene terpolymer containing from 0.5 wt% to 2.2 wt% of ethylene derived units and from 6.0 wt% to 20.0 wt% of 1 butene derived units; Wherein in particular the xylene soluble fraction at 25°C is lower than 15.0 wt% the minimum value being 5.0. Also in this case the balance between xylene soluble fraction and SIT can be further improved

SUMMARY OF THE INVENTION

Now it has surprisingly been found that a multilayer film characterized by having at least a skin layer comprising a composition comprising a propylene/ethylene copolymer and a propylene/ethylene/1-butene terpolymers obtained by a particular heterogeneous catalysts can have improved dyne retention low sealing initiation temperature, better transparency and low xylene solubles.

Thus an object of the present disclosure is a multilayer film characterized by having at least a skin layer comprising a polyolefin composition comprising:

A) from 19 wt% to 50 wt% of a propylene ethylene copolymer having an ethylene derived units content ranging from 1.5 wt% to 6.0 wt%
B) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;

the sum of the amount of component A) and B) being 100;
the composition being characterized by the following features:

- molecular weight distribution (MWD), expressed in terms of Mw/Mn, greater than 4.0;
- the creep and recovery curve measured on the polymer fuse at 200°C measured according to the procedure reported in the characterizing section shows a maximum value between 600 and 1200 seconds lower than $53 \times 10^{-4}$ 1/Pa.

BRIEF DESCRIPTION OF THE DRAWINGS

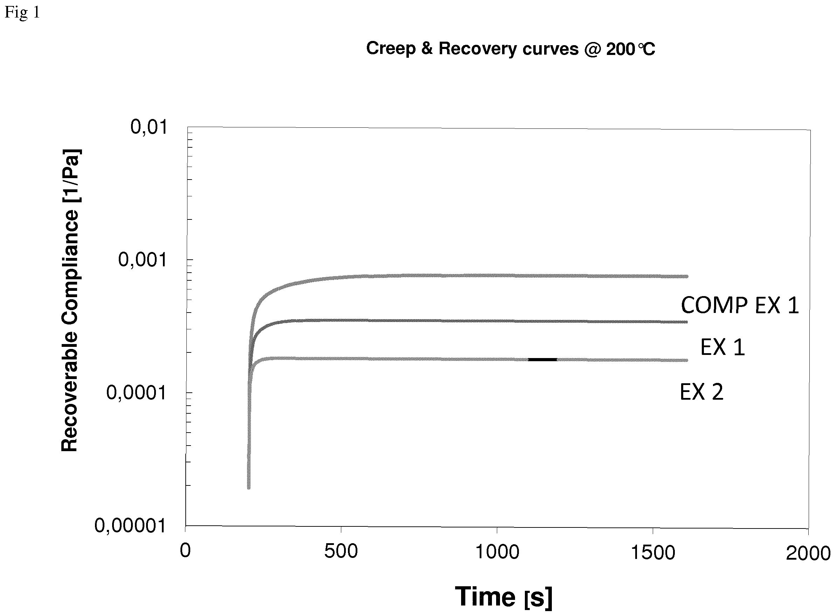

Fig 1 represents the creep and recovery curve measured on the polymer fuse at 200°C measured according to the procedure reported in the characterizing section of examples 1 and 2 and comparative example 1.

DETAILED DESCRIPTION OF THE INVENTION

The multilayer film is characterized by having at least a skin layer comprising a polyolefin composition comprising:

A) from 19 wt% to 50 wt% preferably from 25 wt% to 42 wt%; more preferably from 31 wt% to 38 wt% of a propylene ethylene copolymer having an ethylene derived units content ranging from 1.5 wt% to 6.0 wt%; preferably from 2.6 wt% to 5.2 wt% more preferably from 3.1 wt% to 4.3 wt%;

B) from 50 wt% to 81 wt% preferably from of 58 wt% to 75 wt%; more preferably from 62 wt% to 69 wt% of a propylene ethylene 1-butene terpolymer having an ethylene derived units content ranging from 1.5 wt% and 6.0 wt%; preferably from 1.9 wt% to 4.8 wt%; more preferably from 2.1 wt% to 3.7 wt% and 1-butene derived units content of between 4.8 wt% and 12.4 wt%; preferably from 5.1 wt% to 10.3 wt%: more preferably from 6.8 wt% to 9.5 wt%;

the sum of the amount of component A) and B) being 100;
the composition being characterized by the following features:

-   molecular weight distribution (MWD), expressed in terms of Mw/Mn, greater than 4.0; preferably greater than 4.5; more preferably greater than 4.7;
-   the creep and recovery curve measured on the polymer fuse at 200°C measured according to the procedure reported in the characterizing section shows a maximum value between 600 and 1200 seconds lower than $53 \times 10^{-5}$ 1/Pa; preferably lower than $51 \times 10^{-5}$ 1/Pa, more preferably lower than $45 \times 10^{-5}$ 1/Pa.

Preferably in the polyolefin composition the ethylene derived units content ranges from 1.5 wt% and 6.0 wt%; preferably ranges from 2.1 wt% and 5.2 wt%; more preferably ranges from 2.5 wt% and 4.3 wt%; even more preferably ranges from 2.8 wt% and 3.9 wt%.
Preferably in the polyolefin composition the 1-butene derived units content ranges from 3.2 wt% and 9.8 wt%; preferably ranges from 3.6 wt% and 8.2 wt%; more preferably ranges from 4.8 wt% and 7.9 wt%; even more preferably ranges from 5.8 wt% and 7.4 wt%;
Propylene ethylene 1-butene terpolymer is defined as containing only propylene, ethylene and 1-butene comonomers and propylene ethylene copolymer is defined as containing only propylene and ethylene as comonomer.
Preferably the melt Flow Rate (MFR 230°C 2,16kg) referred to the polyolefin composition as a reactor grade (i.e., copolymers that have not been subject to chemical or physical visbreaking) ranges from 0.9 to 25 g/10min preferably from 3.0 to 20.0g/10min; even more preferably from 4.0 to 18.0g/10min;
The multilayer films of the present disclosure are characterized by having at least a skin layer comprising the polyolefin composition comprising component A) and component B) as above described the remaining layers can be formed of any material known in the art for use in multilayer films or in film-coated products. Thus, for example, each layer can be formed of a polypropylene homopolymer or copolymer or polyethylene homopolymer or copolymer or other kind of polymers such as EVA, EVOH
The combination and number of the layers of the multilayer structure is not particularly limited. The number is usually from 3 to 11 layers, preferably 3 to 9 layers, and more preferably 3 to 7 layers, and more preferably 3 to 5 layers and combinations including A/B/A, A/B/C, A/B/C/B/A, A/B/C/D/C/B/A are possible, provided that at least a skin layer A comprises the propylene ethylene copolymer of the present disclosure.
Preferred layers of the multilayer film of the present disclosure are 3 or 5 wherein at least one skin layer comprises the propylene/ethylene copolymer of the present disclosure. The preferred structure is A/B/A or A/B/C wherein A is the propylene/ethylene copolymer of the present disclosure.
For the purpose of the present disclosure the skin layer is the top layer and/or the bottom layer of a multilayer film.
Preferably in the multilayer film of the present disclosure the top and the bottom layer of the film comprised the propylene/ethylene copolymer of the present disclosure.
The multilayer film obtained with the polyolefin composition have a low seal initiation temperature (SIT) together with a low xylene solubles measured at 0/25°C.
In particular the polyolefin composition has preferably:

-   the content of xylene soluble fraction at 0/25°C (XS) comprised between 1.2 wt% and 15.1 wt%.
-   the seal initiation temperature (SIT) comprised between 90°C and 110°C;

Preferably in the polyolefin composition the xylene soluble fraction at 25°C and the seal initiation temperature (SIT) fulfill the following relation

$$SIT < 114 - (XS \times 1.3)$$

where:

XS = % by weight of the fraction soluble in xylene at 0/25°C determined according to the method given in the characterization section;
SIT = °C is the seal initiation temperature (SIT) determined according to the method given in the characterization section.

Preferably the relation is:

$$SIT < 113 - (XS \times 1.3) ;$$

In particular the difference between the melting point and the SIT is higher than 25°C ; preferably higher than 26°C.

The polyolefin composition herein disclosed can be prepared by a process comprising polymerizing propylene with ethylene in a first stage and then propylene with ethylene and 1-butene, in a second stage in the presence of a catalyst comprising the product of the reaction between:

(i) a solid catalyst component comprising Ti, Mg, Cl, and an electron donor compound characterized by the fact that it contains from 0.1 to 50%wt of Bi with respect to the total weight of said solid catalyst component;
(ii) an alkylaluminum compound and,
(iii) an electron-donor compound (external donor).

Preferably, in the catalyst component the content of Bi ranges from 0.5 to 40% more preferably from 1 to 35, especially from 2 to 25%wt and in a very particular embodiment from 2 to 20%wt.

The particles of solid component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt.

Generally, the amount of Ti ranges from 0.5 to 5% and more preferably from 0.7 to 3%wt.

Preferred internal electron donor compounds are selected from alkyl and aryl esters of optionally substituted aromatic polycarboxylic acids such as esters of benzoic and phthalic acids, Specific examples of such esters are n-butylphthalate, di-isobutylphthalate, di-n-octylphthalate, ethyl-benzoate and p-ethoxy ethyl-benzoate.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence $3^+$ are preferred. Among Bi halides, preferred are Bi trichloride and Bi tribromide. The most preferred Bi compound is $BiCl_3$.

The preparation of the solid catalyst component can be carried out according to several methods. According to one method the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides and in particular is $BiCl_3$. The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

The polyolefin composition of the present disclosure can obtained by blending component A) and B) said components being obtained by polymerization process known in the art such as in gas-phase operating in one or more fluidized or mechanically agitated bed reactors, slurry polymerization using as diluent an inert hydrocarbon solvent, or bulk polymerization using the liquid monomer (for example propylene) as a reaction medium. The polyolefin composition of the present disclosure can be also obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The following examples are given in order to better illustrate the invention and are not intended to limit it in any way.

## EXAMPLES

## CHARACTERIZATIONS

## Determination of Mg, Ti

The determination of Mg and Ti content in the solid catalyst component has been carried out via inductively coupled plasma emission spectroscopy on "I.C.P Spectrometer ARL Accuris". The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then

### Determination of Bi

The determination of Bi content in the solid catalyst component has been carried out via inductively coupled plasma emission spectroscopy on "I.C.P Spectrometer ARL Accuris". The sample was prepared by analytically weighting in a 200 cm$^3$ volumetric flask 0.1÷0.3 grams of catalyst. After slow addition of both ca. 10 milliliters of 65% v/v HNO$_3$ solution and ca. 50 cm$^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.Bv

### Determination of xylene-soluble fraction 0/25°C

2.5 g of polymer and 250 mL of o-xylene are introduced in a glass flask equipped with a refrigerator and a magnetical stirrer. The temperature is raised in 30 minutes up to the boiling point of the solvent. The so obtained solution is then kept under reflux and stirring for further 30 minutes. The closed flask is then kept for 30 minutes in a bath of ice and water then in thermostatic water bath at 25°C for 30 minutes as well. The solid thus obtained is filtered on quick filtering paper and 100 ml of the filtered liquid is poured in a previously weighed aluminum container, which is heated on a heating plate under nitrogen flow, to remove the solvent by evaporation. The container is then kept on an oven at 80°C under vacuum until constant weight is obtained. The content of said xylene-soluble fraction is expressed as a percentage of the original 2.5 grams and then, by difference (complementary to 100), the X.I. %.

### Molecular weight distribution (Mw/Mn)

Molecular weights and molecular weight distribution were measured at 150°C using a Waters Alliance GPCV/2000 instrument equipped with four mixed-bed columns PLgel Olexis having a particle size of 13 μm. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-di-*tert*-butyl-*p*-cresol were added. 300 μl (nominal value) of solution were injected into the column set. A calibration curve was obtained using 10 polystyrene standard samples (EasiCal kit by Agilent) with molecular weights in the range from 580 to 7 500 000. It was assumed that the *K* values of the Mark-Houwink relationship were:

$$K = 1.21 \times 10^{-4} \text{ dl/g}$$

and α = 0.706 for the polystyrene standards,

$$K = 1.90 \times 10^{-4} \text{ dl/g}$$

and α = 0.725 for the experimental samples.
A third order polynomial fit was used for interpolate the experimental data and obtain the calibration curve. Data acquisition and processing was done by using Waters Empowers 3 Chromatography Data Software with GPC option.

### Melt flow rate (MIL)

The melt flow rate MIL of the polymer was determined according to ISO 1133 (230°C, 2.16 Kg).

### Determination of the comonomer content:

The comonomers content have been determined by infrared spectroscopy by collecting the IR spectrum of the sample vs. an air background with a Fourier Transform Infrared spectrometer (FTIR) the instrument data acquisition parameters are:

> purge time: 30 seconds minimum
> collect time: 3 minutes minimum
> apodization: Happ-Genzel
> resolution: 2 cm-1.

Sample Preparation:

Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).

Pressing temperature is 180±10°C (356°F) and about 10 kg/cm2 (142.2 PSI) pressure for about one minute. Release the pressure and remove from the press and cool the sample to room temperature.

The spectrum of a pressed film of the polymer is recorded in absorbance vs. wavenumbers (cm-1). The following measurements are used to calculate ethylene and 1-butene content:

> Area (At) of the combination absorption bands between 4482 and 3950 cm -1 which is used for spectrometric normalization of film thickness.
> Area (AC2) of the absorption band between 750-700 cm-1 after two proper consecutive spectroscopic subtractions of an isotactic non additivate polypropylene spectrum and then of a reference spectrum of an 1-butene-propylene random copolymer in the range 800-690 cm-1.
> Height (DC4) of the absorption band at 769 cm-1 (maximum value), after two proper consecutive spectroscopic subtractions of an isotactic non additivate polypropylene spectrum and then of a reference spectrum of an ethylene-propylene random copolymer in the range 800-690 cm-1.

In order to calculate the ethylene and 1-butene content calibration straights lines for ethylene and 1-butene obtained by using samples of known amount of ethylene and 1-butene are needed:

Calibration of ethylene:

Calibration straight line is obtained by plotting AC2 /At versus ethylene molar percent (%C2m). The slope GC2 is calculated from a linear regression.

Calibration of 1-butene

A calibration straight line is obtained by plotting DC4 /At versus butene molar percent (%C4m). The slope GC4 is calculated from a linear regression.

Spectrum of the unknown sample is recorded and then (At), (AC2) and (DC4) of the unknown sample are calculated. The ethylene content (% molar fraction C2m) of the sample is calculated as follows:

$$\% C2m = \frac{1}{G_{c2}} \cdot \frac{A_{c2}}{A_t}$$

The 1,butene content (% molar fraction C4m) of the sample is calculated as follows:

$$\% C4m = \frac{1}{G_{c4}} \cdot \left( \frac{A_{c4}}{A_t} - I_{c4} \right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

The comonomer content of components A) and B) has been measured formulas:

$$C_{2tot} = X_A C_{2A} + X_B C_{2B}$$

and

$$C_{4tot} = X_B C_{4B}$$

Wherein

C2 is the ethylene derived units wt% of component A, B or total ethylene content;
C4 is the 1-butene derived units wt% of componner B or total 1-butene content
$X_A$ is the amount of component AWt%/100
$X_B$ is the amount of component BWt%/100

### Melting temperature via Differential Scanning Calorimetry (DSC)

The melting points of the polymers (Tm) were measured by Differential Scanning Calorimetry (D.S.C.) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 ± 0.5 mg. In order to obtain the melting point, the weighted sample was sealed into aluminium pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tp,m) was taken as the melting temperature.

### Determination of the Haze

A about 5x5 cm 50 $\mu$m thick film speciments prepared by extruding each test composition in a single screw Collin extruder (length/diameter ratio of screw 1:25) at a film drawing speed of 7 m/min and a melt temperature of 210-250 °C. have been used. The haze value is measured using a Gardner photometric unit connected to a Hazemeter type UX-10 or an equivalent instrument having G.E. 1209 light source with filter "C". Reference samples of known haze are used for calibrating the instrument.

### Seal Initiation Temperature (SIT)

Preparation of the film specimens

Some films with a thickness of 50 $\mu$m are prepared by extruding each test composition in a single screw Collin extruder (length/diameter ratio of screw 1:25) at a film drawing speed of 7 m/min and a melt temperature do 210-250 °C. Each resulting film is superimposed on a 1000 $\mu$m thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a T.M. Long film stretcher at 150°C, thus obtaining a 20 $\mu$m thick film (18 $\mu$m homopolymer+2 $\mu$m test). 2x5 cm specimens are cut from the films.

Determination of the SIT.

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 N/mm². The sealing temperature is increased of 1°C for each seal, starting from about 30 °C less than the melting temperature of the test composition. The sealed samples are left to cool and then their unsealed ends are attached to an Instron machine where they are tested at a traction speed of 50 mm/min.

The SIT. is the minimum sealing temperature at which the seal does not break when a load of at least 2 Newtons is applied in the said test conditions.

**Creep and recovery test**

Creep & recovery curves have been measured by using a Physica MCR301 rheometer having a cone plate geometry of 25 mm of radius and an angle of measuring cone of 1.992° grades with the cone plate on the top. The temperature of the tests is of 200°C.

Determination of the creep time.

The complex viscosity was determined in a frequency sweep test from 100 rad/s to 0.01 rad/s at constant strain of 5% and the value at frequency of 0.01 rad/s was chosen to calculate the creep time (no time setting in the profile). The creep time has been then calculated by using the formula:

$$\text{Creep time} = \text{complex viscosity}_{@0.01\text{rad/s}}/100; \quad [1]$$

Wherein 100 is the applied stress in Pascal

Determination of recovery time

The recovery time has been calculated according to the following formula:

$$\text{Recovery time} = \text{Creep time} * 7 \quad [2]$$

Creep and recovery test

a) creep
the creep has been measured once a second for a maximum seconds according to the creep time calculated in [1]. The shear stress applied is 100 Pa;
b) recovery
the recovery has been measured once a second for a maximum seconds according to the recovery time calculated in [2] The shear stress applied is 0 Pa ;
at the end of the test the software calculates the curve s vs Pa

**Polymerization examples 1 and 2**

**Procedure for the preparation of the spherical adduct**

Microspheroidal MgCl$_2$·pC$_2$H$_5$OH adduct was prepared according to the method described in Comparative Example 5 of WO98/44009, with the difference that BiCl$_3$ in a powder form and in the amount of 3 mol% with respect to the magnesium has been added before feeding of the oil. The adduct contains 11.2 wt % of Mg.

**Procedure for the preparation of the solid catalyst component**

Into a 300 L jacketed reactor, equipped with mechanical stirrer, condenser and thermocouple 200 L of $TiCl_4$ were introduced at room temperature under nitrogen atmosphere. After cooling to 0°C, while stirring, diisobutylphthalate and 8 kg of the spherical adduct (prepared as described above) were sequentially added . The amount of charged internal donor was such to meet a Mg/donor molar ratio of 8. The temperature was raised to 100°C and maintained for 1 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1/2 hour. Stirring was stopped again, the solid was allowed to settle and the supernatant liquid was siphoned off at 120 °C. The treatment with $TiCl_4$ at 120 °C was then repeated again with the same procedure as before but the treatment time was decreased to 15 minutes. The solid was washed with anhydrous hexane six times in temperature gradient down to 60°C and one time at room temperature. The obtained solid was then dried under vacuum.

**Prepolymerization treatment**

Before introducing it into the polymerization reactors, the solid catalyst component described above have been contacted with triethyl aluminum (TEAL) and Dicyclopentyldimethoxysilane (DCPMS, D donor) in a ratio reported on table 1. Then the resulting mixture is subjected to prepolymerization by maintaining it in suspension in liquid propylene at 20 °C for about 5 minutes before introducing it into the polymerization reactor.

**Polymerization**

Into a first gas phase polymerization reactor a propylene ethylene copolymer is produced by feeding in a continuous and constant flow the prepolymerized catalyst system, hydrogen (when used as molecular weight regulator) propylene and ethylene in the gas state.

The polymer produced in the first reactor is discharged in a continuous flow and, after having been purged of unreacted monomers, is introduced, in a continuous flow, into a second gas phase polymerization reactor, together with quantitatively constant flows of hydrogen (when used) 1-butene, ethylene and propylene in the gas state.

The polymer particles exiting the second reactor are subjected *to* a steam treatment to remove the reactive monomers and volatile substances, and then dried.

The main polymerization conditions are reported in Table1. The polymer features have been reported on table 2

Table 1

| | | ex1 | ex 2 |
|---|---|---|---|
| catalyst feed | g/h | 10 | 10 |
| TEAL/solid catalyst component weight ratio | g/g | 4.2 | 3.9 |
| TEAL/D donor weight ratio | g/g | 3.9 | 4.3 |
| First gas phase reactor | | | |
| Polymerisation temperature | °C | 70 | 70 |
| Pressure | barg | 18.0 | 18.1 |
| H2/C3 | mol/mol | 0.065 | 0.032 |
| **C2/C2+C3** | mol/mol | **0.040** | **0.096** |
| split first reactor (amount A) | wt% | 34 | 35 |
| Second gas phase reactor | | | |
| Polymerisation temperature | °C | 70 | 75 |
| Pressure | barg | 16.0 | 16.0 |
| MFR* | g/10min | 5.2 | 6.7 |
| H2/C3 | mol/mol | 0.163 | 0.072 |

(continued)

|  |  | ex1 | ex 2 |
|---|---|---|---|
| **C2/C2+C3** | mol/mol | **0.042** | **0.065** |
| **C4/C4+C3** | mol/mol | **0.130** | **0.138** |
| split second reactor (amount B) | wt% | 66 | 65 |
| C2=ethylene; C3=propylene; C4=1-butene; H2=hydrogen<br>* total MFR of component A)+component B) | | | |

**Table 2**

|  |  | ex 1 | ex2 | comp ex 3 |
|---|---|---|---|---|
| split component A) | wt% | 34 | 35 | 35 |
| C2-% content of component A | wt% | 3.3 | 3.5 | 3.3 |
| MFR (total) | g/10 min | 5.2 | 6.7 | 5.5 |
| C2% content (total) | wt% | 3.4 | 3.0 | 3.2 |
| C4% content (total) | wt% | 6.1 | 5.7 | 5.9 |
| Xylene Soluble 0°/25° (XS) | wt% | 9.7 | 6.3 | 8.7 |
| Mw/Mn |  | 5.0 | 5.2 | 6.0 |
| Tm | °C | 130.4. | 131.1 | 130.5 |
| SIT | °C | 98 | 104 | 105 |
| Haze | % | 0.12 | 0.10 | 0.20 |
| Maximum recoverable compliance between 800 and 1200 s | 1/Pa | $35 \cdot 10^{-5}$ | $50 \cdot 10^{-5}$ | $78 \cdot 10^{-5}$ |
| 114-(XSx1.3) |  | 101 | 106 | 103 |
| C2=ethylene; C3=propylene; C4=1-butene | | | | |

Comparative example 1 is a commercial product sold by Lyondellbasell having the feature reported in table 2 and being produced by using a catalyst equal to that one of examples 1 and 2 but not containing bismuth.

**Multilayer film**

The polymers of examples 1-2 and comparative example 1 have been used to produce a A/B/A multilayer film wherein the A layer are the polymers of the examples and the B layer is a propylene homopolymer MOPLEN HP515M sold by Lyondellbasell. Processing parameters are reported in table 3.

Table 3

|  |  | Layer thickness | Melt temperature | Line speed |
|---|---|---|---|---|
|  |  | μm | °C | m/min |
| **Layer A** | Internal sealing later | 1 | 244 |  |
| **Layer B** | Core | 28 | 263 | 36 |
| **Layer A** | Outside layer | 1 | 244 |  |

The multilayer films have been stretched longitudinally with a ratio 5.1:1 and transversally with a ratio 9.1:1.
Sample of the obtained films have been subjected to a corona treatment and then the surface tension has been measured after the days reported on table 4.

Table 4

| surface tension days | Ex | 1 | 2 | comp ex 3 |
|---|---|---|---|---|
| 1 | dyne/cm | 48 | 47 | 47 |
| 7 | dyne/cm | 46 | 46 | 45 |
| 14 | dyne/cm | 45 | 45 | 44 |
| 21 | dyne/cm | 45 | 45 | 42 |
| 28 | dyne/cm | 44 | 44 | 42 |

From table 4 clearly results that the films of the present disclosure have a higher surface tension after 4 weeks. This allow a better printability of the films even after long time, thus having a longer shelf life.

**Claims**

1. A multilayer film is **characterized by** having at least a skin layer comprising a polyolefin composition comprising:

    A) from 19 wt% to 50 wt% of a propylene ethylene copolymer having an ethylene derived units content ranging from 1.5 wt% to 6.0 wt%
    B) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;
    the sum of the amount of component A) and B) being 100;
    the composition being **characterized by** the following features:

    - molecular weight distribution (MWD), expressed in terms of Mw/Mn, greater than 4.0;
    - the creep and recovery curve measured on the polymer fuse at 200°C measured according to the procedure reported in the characterizing section shows a maximum value between 600 and 1200 seconds lower than $53 \times 10^{-5}$ 1/Pa.

2. The multilayer film according to claim 1 wherein in the polyolefin composition component A) ranges from 25 wt% to 42 wt% and component B) ranges from 58 wt% and 75 wt%

3. The multilayer film according to claims 1 or 2 wherein in the polyolefin composition the ethylene derived units content in component A) ranges from 2.6 wt% to 5.2 wt% .

4. The polyolefin composition according to anyone of claims 1-3 wherein in the polyolefin composition the ethylene derived units content in component B) ranges from 1.9 wt% to 4.8 wt%; and the 1-butene derived units content ranges from 5.1 wt% to 10.3 wt%:

5. The multilayer film according to anyone of claims 1-4 wherein in the polyolefin composition the creep and recovery curve measured on the polymer fuse at 200°C shows a maximum value between 600 and 1200 seconds lower than $51 \times 10^{-5}$ 1/Pa

6. The multilayer film according to anyone of claims 1-5 wherein in the polyolefin composition the ethylene derived units content ranges from 1.5 wt% and 6.0 wt%.

7. The multilayer film according to anyone of claims 1-6 wherein in the polyolefin composition the 1-butene derived units content ranges from 3.2 wt% and 9.8 wt%.

8. The multilayer film according to anyone of claims 1-7 having from 3 to 11 layers.

9. The multilayer film according to anyone of claims 1-8 having from 3 to 9 layers.

10. The multilayer film according to anyone of claims 1-9 having from 3 to 7 layers.

11. The multilayer film according to anyone of claims 1-10 having 3 or 5 layers.

12. The multilayer film according to anyone of claims 1-11 having an A/B/A or A/B/C structure wherein the A component is the propylene ethylene copolymer of claims 1-5

**Patentansprüche**

1. Mehrschichtfolie, die **dadurch gekennzeichnet ist, dass** sie mindestens eine Hautschicht aufweist, die eine Polyolefinzusammensetzung umfasst, welche umfasst:

A) 19 Gew.% bis 50 Gew.% eines Propylen-Ethylen-Copolymers mit einem Gehalt an von Ethylen abgeleiteten Einheiten im Bereich von 1,5 Gew.% bis 6,0 Gew.%;
B) 50 Gew.% bis 81 Gew.% eines Propylen-Ethylen-1-Buten-Terpolymers mit einem Gehalt an von Ethylen abgeleiteten Einheiten im Bereich von 1,5 Gew.% bis 6,0 Gew.% und einem Gehalt an von 1-Buten abgeleiteten Einheiten zwischen 4,8 Gew.% und 12,4 Gew.%;
wobei die Summe der Menge der Komponenten A) und B) 100 beträgt;
wobei die Zusammensetzung durch die folgenden Merkmale gekennzeichnet ist:

- eine Molekulargewichtsverteilung (MWD), ausgedrückt in Form von Mw/Mn, größer als 4,0;
- die Kriech-Erholungs-Kurve, gemessen an der Polymerschmelze bei 200 °C, gemessen gemäß der in dem Charakterisierungsabschnitt beschriebenen Vorgehensweise, zeigt einen Maximalwert zwischen 600 und 1200 Sekunden unter $53 \times 10^{-5}$ 1/Pa.

2. Mehrschichtfolie nach Anspruch 1, wobei in der Polyolefinzusammensetzung Komponente A) im Bereich von 25 Gew.% bis 42 Gew.% liegt und Komponente B) im Bereich von 58 Gew.% bis 75 Gew.% liegt.

3. Mehrschichtfolie nach Anspruch 1 oder 2, wobei in der Polyolefinzusammensetzung der Gehalt an von Ethylen abgeleiteten Einheiten in Komponente A) im Bereich von 2,6 Gew.% bis 5,2 Gew.% liegt.

4. Polyolefinzusammensetzung nach einem der Ansprüche 1 bis 3, wobei in der Polyolefinzusammensetzung der Gehalt an von Ethylen abgeleiteten Einheiten in Komponente B) im Bereich von 1,9 Gew.% bis 4,8 Gew.% liegt; und der Gehalt an von 1-Buten abgeleiteten Einheiten im Bereich von 5,1 Gew.% bis 10,3 Gew.% liegt.

5. Mehrschichtfolie nach einem der Ansprüche 1 bis 4, wobei in der Polyolefinzusammensetzung die Kriech-Erholungs-Kurve, gemessen an der Polymerschmelze bei 200 °C, einen Maximalwert zwischen 600 und 1200 Sekunden unter $51 \times 10^{-5}$ 1/Pa zeigt.

6. Mehrschichtfolie nach einem der Ansprüche 1 bis 5, wobei in der Polyolefinzusammensetzung der Gehalt an von Ethylen abgeleiteten Einheiten im Bereich von 1,5 Gew.% bis 6,0 Gew.% liegt.

7. Mehrschichtfolie nach einem der Ansprüche 1 bis 6, wobei in der Polyolefinzusammensetzung der Gehalt an von 1-Buten abgeleiteten Einheiten im Bereich von 3,2 Gew.% bis 9,8 Gew.% liegt.

8. Mehrschichtfolie nach einem der Ansprüche 1 bis 7 mit 3 bis 11 Schichten.

9. Mehrschichtfolie nach einem der Ansprüche 1 bis 8 mit 3 bis 9 Schichten.

10. Mehrschichtfolie nach einem der Ansprüche 1 bis 9 mit 3 bis 7 Schichten.

11. Mehrschichtfolie nach einem der Ansprüche 1 bis 10 mit 3 oder 5 Schichten.

12. Mehrschichtfolie nach einem der Ansprüche 1 bis 11 mit einer A/B/A- oder A/B/C-Struktur, wobei die A-Komponente das Propylen-Ethylen-Copolymer nach den Ansprüchen 1 bis 5 ist.

**Revendications**

1. Film multicouche **caractérisé en ce qu'**il comprend au moins une couche de peau comprenant une composition polyoléfinique comprenant :

   A) 19% en poids à 50% en poids d'un copolymère de propylène-éthylène présentant une teneur en motifs dérivés d'éthylène située dans la plage de 1,5% en poids à 6,0% en poids
   B) 50% en poids à 81% en poids d'un terpolymère de propylène-éthylène-1-butène présentant une teneur en motifs dérivés d'éthylène située dans la plage de 1,5% en poids à 6,0% en poids et une teneur en motifs dérivés de 1-butène située entre 4,8% en poids et 12,4% en poids ;
   la somme de la quantité de constituant A) et de constituant B) valant 100 ;
   la composition étant **caractérisée par** les caractéristiques suivantes :

   - une distribution des poids moléculaires (MWD), exprimée en Mw/Mn, supérieure à 4,0 ;
   - la courbe de fluage et de récupération mesurée sur la masse fondue de polymère à 200°C, mesurée selon la procédure rapportée dans la section de caractérisation, présente une valeur maximale entre 600 et 1200 secondes inférieure à $53 \times 10^{-5}$ 1/Pa.

2. Film multicouche selon la revendication 1, où, dans la composition polyoléfinique, le constituant A) est situé dans la plage de 25% en poids à 42% en poids et le constituant B) est situé dans la plage de 58% en poids à 75% en poids

3. Film multicouche selon les revendications 1 ou 2, où, dans la composition polyoléfinique, la teneur en motifs dérivés d'éthylène dans le constituant A) est située dans la plage de 2,6% en poids à 5,2% en poids.

4. Composition polyoléfinique selon l'une quelconque des revendications 1 à 3, où, dans la composition polyoléfinique, la teneur en motifs dérivés d'éthylène dans le constituant B) est située dans la plage de 1,9% en poids à 4,8% en poids et la teneur en motifs dérivés de 1-butène est située dans la plage de 5,1% en poids à 10,3% en poids.

5. Film multicouche selon l'une quelconque des revendications 1 à 4, où, dans la composition polyoléfinique, la courbe de fluage et de récupération mesurée sur la masse fondue de polymère à 200°C présente une valeur maximale entre 600 et 1200 secondes inférieure à $51 \times 10^{-5}$ 1/Pa

6. Film multicouche selon l'une quelconque des revendications 1 à 5, où, dans la composition polyoléfinique, la teneur en motifs dérivés d'éthylène est située dans la plage de 1,5% en poids à 6,0% en poids.

7. Film multicouche selon l'une quelconque des revendications 1 à 6, où, dans la composition polyoléfinique, la teneur en motifs dérivés de 1-butène est située dans la plage de 3,2% en poids à 9,8% en poids.

8. Film multicouche selon l'une quelconque des revendications 1 à 7, présentant 3 à 11 couches.

9. Film multicouche selon l'une quelconque des revendications 1 à 8, présentant 3 à 9 couches.

10. Film multicouche selon l'une quelconque des revendications 1 à 9, présentant 3 à 7 couches.

11. Film multicouche selon l'une quelconque des revendications 1 à 10, présentant 3 ou 5 couches.

12. Film multicouche selon l'une quelconque des revendications 1 à 11, présentant une structure A/B/A ou A/B/C dans laquelle le constituant A est le copolymère de propylène-éthylène des revendications 1 à 5.

Fig 1

Creep & Recovery curves @ 200 °C

EP 3 331 701 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6221984 B
- WO 2009019169 A
- WO 2013174778 A
- US P4399054 A
- US P4469648 A
- WO 9844009 A